# EUROPÄISCHE PATENTANMELDUNG

(11) **EP 2 343 643 A1**
(43) Veröffentlichungstag der Anmeldung: **13.07.2011**
(21) Anmeldenummer: 09015770.2
(22) Anmeldetag: 21.12.2009
(51) Int. Cl.: G06F 9/44, G06F 3/048

(54) **Verfahren und Software-Komponente für eine Rückgängig-Funktion mit einer graphischen Benutzeroberfläche**

(71) Anmelder: SIEMENS AKTIENGESELLSCHAFT, 80333 München (DE)
(72) Erfinder: Fister, Markus, 91054 Erlangen (DE); Perna, Fabio, 90482 Nürnberg (DE); Tröster, Thomas, 91723 Dittenheim (DE)

(57) **Zusammenfassung**

Die Erfindung betrifft ein Verfahren und eine Software-Komponente für eine Rückgängig-Funktion für ein Gerät mit einer graphischen Benutzeroberfläche, insbesondere für ein Programmiergerät einer industriellen Automatisierungsanordnung, wobei eine Mehrzahl an Bedienvorgängen (RA1, RA2, RA3) protokolliert wird, wobei nach Eingabe eines Befehls eine Anzahl der protokollierten Bedienvorgänge (RA1, RA2, RA3) in einem Auswahldialog (RL) angezeigt wird, und wobei durch eine Benutzereingabe in Bezug auf den Auswahldialog (RL) einer oder mehrere der angezeigten Bedienvorgänge (RA1, RA2, RA3) ausgewählt wird oder werden, wobei dieser oder diese rückgängig gemacht wird oder werden. Dabei wird zumindest einem der in dem Auswahldialog (RL) angezeigten Bedienvorgänge (RA1, RA2, RA3) fallweise ein Hinweis (HWZ) angezeigt.

## Beschreibung

Verfahren und Software-Komponente für eine Rückgängig-Funktion mit einer graphischen Benuteroberfläche

Die Erfindung betrifft ein Verfahren für eine Rückgängig-Funktion für ein Gerät mit einer graphischen Benutzeroberfläche gemäß dem Oberbegriff des Patentanspruchs 1, und eine Software-Komponente zur Durchführung des Verfahrens gemäß dem Oberbegriff des Patentanspruchs 5.

Bei technischen Geräten mit einer graphischen Benutzeroberfläche, beispielsweise Personal-Computer mit fensterorientierten Betriebssystemen, sind Anwendungsprogramme üblicherweise mit einer sog. "Rückgängig"-Funktion ausgestattet. Damit kann zumindest der letzte Bedienvorgang, oft aber auch eine Mehrzahl von Bedienvorgängen rückgängig gemacht werden, d.h., dass das bearbeitete Objekt o.ä. in denjenigen Zustand zurück versetzt wird, den dieses Objekt vor dem letzten Bedienvorgang hatte. Zur Bedienung dieser "Rückgängig"-Funktion ist im Beispiel des Betriebssystems Microsoft Windows und den dort geläufigen Anwendungen das Tastatur-Kürzel "Strg+Z" üblich; weiterhin findet man in sehr vielen Anwendungen dieselbe Funktion auch als Menüpunkt, beispielsweise in einem "Bearbeiten"-Menü.

In den Fällen, in denen mehrere Schritte, also Bedienvorgänge, widerrufen werden sollen, ist es für einen Benutzer oft schwer, den Überblick über die Konsequenzen zu behalten. Einige geläufige Anwendungsprogramme weisen daher zur Bedienung der "Rückgängig"-Funktion ein Bedienelement (Button) auf, womit eine Liste der zuletzt vorgenommenen Bedienvorgänge angezeigt wird, wobei jeder dieser Bedienvorgänge mit Begriffen wie "Eingabe von XY", "Formatieren", "Löschen" o.ä. gekennzeichnet ist. Somit kann ein Benutzer aus dieser Liste auswählen, wie viele der letzten Bedienschritte bzw. Bedienvorgänge rückgängig gemacht werden sollen und hat eine Übersicht darüber, welcher Art die Aktionen waren, die jetzt widerrufen werden sollen.

Für den Fall, dass ein Bedienvorgang irrtümlich widerrufen wurde, weisen darüber hinaus viele Anwendungsprogramme eine sog. "Wiederherstellen"-Funktion auf, wodurch zumindest die Konsequenzen des Problems, dass in unübersichtlichen Fällen unbeabsichtigt eine Aktion rückgängig gemacht worden ist, gemildert werden können. Dennoch ist es häufig so, dass eine "Rückgängig"-Aktion sowie eine dazugehörige "Wiederherstellen"-Aktion jeweils mit einem hohen Rechenaufwand oder mit umfangreichen Speicherzugriffen verbunden sein kann, was in der Praxis bedeutet, dass entsprechende Bearbeitungszeiten notwendig sind und damit der Arbeitfluss einer Bedienperson beeinträchtigt werden kann.

Ein weiteres Problem bei den bekannten Anwendungen und Verfahren in diesem Zusammenhang besteht darin, dass oftmals Objekte, Datenblätter etc. wechselweise von verschiedenen Anwendungen bearbeitet werden, oder dass ein Benutzer während einer "Arbeitssitzung" wechselweise eine Mehrzahl von Anwendungsprogrammen, die oft derselben "Programmfamilie" zugehören, verwendet. Jeder der dabei verwendeten Anwendungen hat dabei regelmäßig ihre eigene "Rückgängig"-Funktion (dasselbe gilt für die "Wiederherstellen"-Funktion), was das Rückgängig-Machen komplexer Bedienvorgänge erschwert. Dies betrifft in besonderer Weise die Programmiergeräte industrieller Automatisierungs-Anordnungen, bei denen in einem sog. "Portal" mehrere Editoren, Komponenten etc. gleichzeitig dasselbe Projekt bearbeiten können.

Es ist also eine Aufgabe der vorliegenden Erfindung, den Bedienkomfort für die Rückgängig-Funktion von Anwendungen der Geräte mit graphischer Benutzeroberfläche zu verbessern.

Es ist dabei ein zentraler Gedanke der vorliegenden Erfindung, die für die Rückgängig-Funktion verfügbaren Bedienvorgänge anzuzeigen und dabei fallweise mit Hinweisen zu versehen, welche über die Benennung der rückgängig zu machenden Aktion hinaus den Benutzer auf möglicherweise nicht absehbare Konsequenzen hinweist. Dies kann beispielsweise eine außergewöhnlich lange voraussichtliche Bearbeitungsdauer des "Rückgängig-Befehls" sein, oder aber ein Hinweis auf die Tatsache sein, dass die betreffende Aktion bzw. der betreffende und rückgängig zu machende Bedienvorgang ein Objekt betrifft, welches sich derzeit nicht im sichtbaren Arbeitsbereich der Anwendung oder in eine anderen Anwendung oder Komponente befindet. Es ist ein weiteres Merkmal der vorliegenden Erfindung, dass in der Liste, in der die rückgängig zu machenden Bedienvorgänge zur Auswahl angeboten werden, die betreffenden Bedienvorgänge mehrerer derzeit benutzter Anwendungen zusammengefasst werden, damit in chronologischer Reihenfolge die gewünschte Anzahl an Bedienvorgängen rückgängig gemacht werden kann und dabei nur ein Bedienelement benutzt werden muss. Dasselbe betrifft selbstverständlich auch eine etwaige Anzahl von Bedienvorgängen für eine "Wiederherstellen"-Funktion.

Die Aufgabe wird insbesondere durch ein Verfahren nach Patentanspruch 1 gelöst, wobei vorgesehen ist, das für eine Rückgängig-Funktion für ein Gerät mit einer graphischen Benutzeroberfläche, insbesondere für ein Programmiergerät in einer industriellen Automatisierungsanordnung, eine Mehrzahl an Bedienvorgängen protokolliert wird, wobei nach Eingabe eines Befehls eine Anzahl der protokollierten Bedienvorgänge in einem Auswahldialog angezeigt wird. Dabei wird durch eine Benutzereingabe in Bezug auf den Auswahldialog einer oder mehrere der angezeigten Bedienvorgänge ausgewählt, wobei dieser oder diese Bedienvorgänge rückgängig gemacht wird oder werden. Dazu wird zu zumindest einem der in dem Auswahldialog angezeigten Bedienvorgänge ein Hinweis angezeigt. Durch dieses Verfahren ist es möglich, solche Bedienvorgänge gesondert herauszustellen, deren Widerruf mit Konsequenzen verbunden sind, die von einem Benutzer möglicherweise nicht oder nicht in dieser Form erwartet werden. Bedingungen für die Ausgabe von Hinweisen können herstellerseitig vorgegeben oder benutzerseitig konfiguriert werden.

Die Aufgabe wird weiter durch eine Software-Komponente zur Durchführung des vorstehend beschriebenen Verfahrens gelöst, wobei diese Software-Komponente mit Protokollierungsmitteln zur Protokollierung von Bedienvorgängen ausgestattet ist, und wobei die Software-Komponente mit Anzeige- und Auswahlmitteln für einen Benutzerdialog zur Ausführung von Rückgängig-Aktionen versehen ist. Dabei ist die Software-Komponente zur Anzeige von Hinweisen zu ausgewählten der protokollierten und angezeigten der Bedienvorgänge in dem Benutzerdialog ausgestaltet. Durch diese Software-Komponente können die Vorteile des erfindungsgemäßen Verfahrens realisiert werden.

Vorteilhafte Ausgestaltungen des erfindungsgemäßen Verfahrens sind in den abhängigen Patentansprüchen 2 bis 4 angegeben; die dabei beschriebenen Merkmale und Vorteile gelten sinngemäß auch für die erfindungsgemäße Software-Komponente. Umgekehrt sind auch die vorteilhaften Ausgestaltungen der erfindungsgemäßen Software-Komponente, die in den abhängigen Patentansprüchen 6 bis 8 angegeben sind, und die in diesem Zusammenhang auftretenden Vorteile sinngemäß auch auf das erfindungsgemäße Verfahren anwendbar.

In einer vorteilhaften Ausgestaltung der Erfindung werden mittels des Auswahldialogs Bedienvorgänge von zumindest zwei verschiedenen Anwendungen, Dateien, Arbeitsblättern oder Kontexten angezeigt, wobei diejenigen der Bedienvorgänge jeweils durch einen Hinweis gekennzeichnet werden, die ein Objekt oder einen Bedienvorgang in einer zum Zeitpunkt der Anzeige des Auswahldialogs inaktiven oder verdeckten oder minimierten der Anwendungen, Dateien, Arbeitsblätter oder Kontexte betreffen. Dies erhöht zum Einen die Übersichtlichkeit, und macht es zum Anderen möglich, in einem Bedienschritt die Bedienvorgänge verschiedener Anwendungen o.ä. rückgängig zu machen, und zwar in der richtigen chronologischen Reihenfolge. Dabei kann der Hinweis den Benutzer darüber informieren bzw. warnen, falls die Rückgängig-Aktion Dinge oder Inhalte betrifft, die sich derzeit nicht im Fokus des Benutzers befinden.

Alternativ oder zusätzlich zu den zuvor beschriebenen Maßnahmen wird der Hinweis zumindest zu jeweils demjenigen oder denjenigen der Bedienvorgänge angezeigt, bei dem/denen die Rückgängig-Aktion eine voraussichtliche Ausführungsdauer zugeordnet ist, die eine vordefinierte Maximaldauer überschreitet. Zusätzlich oder alternativ kann diese Warnung auch eine Ausführungsdauer betreffen, die notwendig ist, wenn die Rückgängig-Aktion durch eine spätere Wiederherstellen-Aktion aufgehoben werden soll. Für diese Funktionen ist es notwendig, dass die voraussichtliche Ausführungsdauer für die Rückgängig-Aktion bzw. eine spätere Wiederherstellen-Aktion abgeschätzt wird. Dazu kann in einer ersten Näherung die Zeitdauer als eine Schätzungsgrundlage verwendet werden, die für den ursprünglichen, rückgängig zu machenden Bedienvorgang notwendig war. D.h., dass für einen Vorgang, der eine vergleichsweise lange Zeitdauer in Anspruch genommen hat (beispielsweise das Neu-Berechnen einer komplexen Tabelle in einer Tabellenkalkulation), in einer ersten Näherung ein ähnlicher Aufwand zur Wiederherstellung der vorherigen Daten erforderlich ist.

Ein weiterer Vorteil ergibt sich, wenn eine Ausgabe oder Anzeige des Hinweises in den Fällen erfolgt, in denen von dem jeweiligen Bedienvorgang bzw. dessen Widerruf solche Daten oder Objekte betroffen sind, die seit diesem Bedienvorgang gespeichert oder von einem anderen Prozess verändert oder verwendet worden sind. Durch einen solchen Hinweis können Inkonsistenzen insbesondere bei komplexen Anwendungsszenarien mit verschiedenen Anwendungen, die dieselben Daten betreffen, vermieden werden.

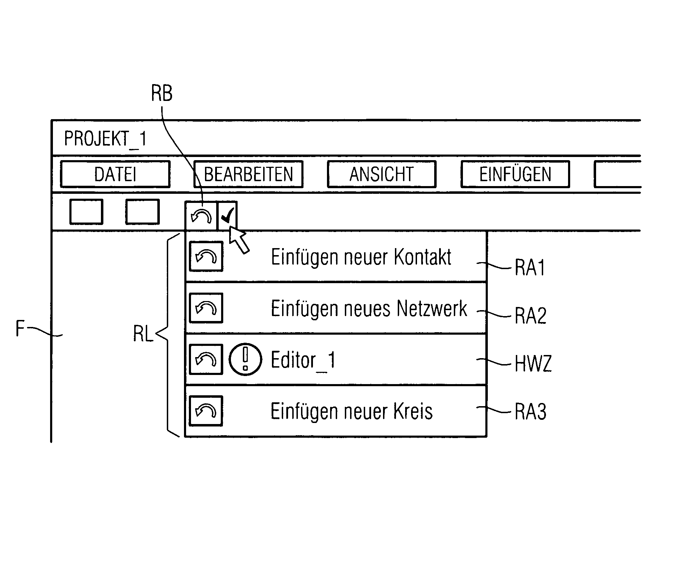

Ein Ausführungsbeispiel des erfindungsgemäßen Verfahrens wird nachfolgend anhand der Zeichnung erläutert. Es dient gleichzeitig der Erläuterung einer erfindungsgemäßen Software-Komponente.

Dabei zeigt die einzige Figur in einer schematischen Darstellung ein Bildschirmfenster einer graphischen Benutzeroberfläche, bei dem ein Auswahldialog für eine Anzahl widerrufbarer Bedienvorgänge mit Hinweisen dargestellt ist.

In der Figur ist ein Fenster F einer Anwendung dargestellt, welche mittels der graphischen Benutzeroberfläche eines fensterorientierten Betriebssystems, hier: Microsoft Windows, dargestellt wird. Die Anwendung ist im vorliegenden Ausführungsbeispiel ein graphischer Editor für ein sog. Projekt ("PROJEKTè_1"), in welchem ein Anwendungsprogramm für eine industrielle Automatisierungskomponente erstellt werden soll. Das Fenster F umfasst dabei die im Bereich von Anwendungen des verwendeten Betriebssystems üblichen Pull-Down-Menüs wie "Datei", "Bearbeiten", "Ansicht", "Einfügen", ... sowie weitere Bedienelemente (engl.: "Controls") in Form von sog. "Buttons", "Slidern" etc..

Ein Bedienelement RB ("Rückgängig-Button") ist dabei mit einer Software-Komponente verknüpft, welche für die Programmierumgebung des hier bearbeiteten Projektes "PROJEKT_1" eine "integrierte", also Anwendungs-übergreifende Rückgängig-Funktion bereit stellt. Dabei ist dem Bedienelement RB ein sog. "List-Box-Pfeil" als Teil-Bedienelement zugeordnet, bei dessen Betätigung mit einem Auswahlmittel (Mouse-Zeiger) als Auswahldialog eine Liste RL ("Rückgängig-Liste") dargestellt wird. Dazu weist die Software-Komponente Protokollierungsmittel auf, welche in der hier beschriebenen vorteilhaften Ausgestaltung der Erfindung nicht nur die Bedienvorgänge des hier sichtbaren Editors protokolliert, sondern alle Bedienvorgänge, die die Programmierumgebung betreffen, bei der der hier gezeigte Editor nur ein Bestandteil von mehreren miteinander in Bezug stehenden Anwendungen und Teil-Anwendungen ist.

In dem Auswahldialog RL sind, wie im Beispiel der Figur gezeigt, drei Bedienvorgänge dargestellt, für die jeweils in dem Auswahldialog ein Auswahlelement RA1, RA2, RA3 ("Rückgängig-Aktion") in Gestalt eines "klickbaren" Buttons dargestellt ist. Während die beiden zuletzt ausgeführten Bedienvorgänge und daher an den beiden oberen Stellen des Auswahldialogs RL dargestellten Auswahl-Elemente RA1, RA2 von dem hier sichtbaren Editor ausgeführt wurden und daher auch von diesem hier sichtbaren Editor rückgängig gemacht werden können, ist der drittletzte Bedienvorgang, der mit dem Bedienelement RA3 verknüpft ist, eine graphische Aktion gewesen (Einfügen eines Kreises), die zwar ebenfalls eine Veränderung des hier sichtbaren Projektes betrifft bzw. betraf, aber von einem anderen, hier nicht sichtbaren Editor "Editor_1" durchgeführt wurde. Dies bedeutet, dass in dem Fall, in dem ein Benutzer das Auswahl-Bedienelement RA3 betätigt, zunächst im aktiven Editor die beiden jüngsten Bedienvorgänge rückgängig gemacht werden müssen, und zum Widerruf der drittletzten Aktion "Einfügen neuer Kreis" ein Wechsel in einen anderen, hier nicht sichtbaren Editor notwendig ist. Dies wird durch die Hinweiszeile HWZ als ein Hinweis angezeigt, wobei die Hinweiszeile HWZ von einem Bedien- oder Auswahlmittel (z.B. Mouse-Zeiger) nicht bedient bzw. selektiert werden kann. In einer alternativen Ausführungsform der Erfindung ist es jedoch möglich, durch "Anklicken" der Hinweiszeile HWZ in die andere Teil-Anwendung, also den Editor "Editor_1" zu wechseln. Vorteilhaft kann beim Verbleiben des Mouse-Zeigers im Bereich der Hinweiszeile HWZ ein sog. "Tool-Tip" mit weitergehenden Informationen zum Hinweis eingeblendet werden. Alternativ oder zusätzlich können auch Hinweise zu als kritisch definierten Aktionen ausgegeben werden, beispielsweise zum Löschen bzw. dem Widerruf einer Erzeugung von Objekten.

Zum Aufruf der hier beschriebenen erweiterten Rückgängig-Funktion (engl.: "Undo-Function") kann ein Benutzer mit einem Auswahlmittel (z.B. Mouse-Zeiger, Touchpad etc.) entweder das Bedienelement RB betätigen oder einen Tastatur-Befehl (z.B. "Shortcut" Strg+Z) eingeben. Danach öffnet sich der beschriebene Auswahldialog RL, der mit den üblichen Betätigungsmitteln (Tastatur, Mouse-Zeiger, Touchpad etc.) bedient wird. Gleiches gilt für eine ebenso wirkende Wiederherstellen-Funktion (engl.: Restore-Function), die hier nicht separat beschrieben ist, aber dennoch erfindungsgemäß ausgestaltet sein kann.

Neben der hier exemplarisch gezeigten Hinweiszeile HWZ, die auf einen Wechsel einer Anwendung bzw. einer Teilanwendung hinweist, können auch zusätzlich oder alternativ Hinweise betreffend einer möglichen Bearbeitungsdauer für eine Rückgängig-Aktion dargestellt werden. Dazu weist die Software-Komponente eine Einheit zur Abschätzung einer voraussichtlichen Bearbeitungsdauer auf. Dies kann beispielsweise eine Tabelle sein, in der bereits herstellerseitig die durchschnittliche bzw. voraussichtliche Bearbeitungsdauer für verschiedene Befehle bzw. Bedienvorgänge abgelegt ist. Es können jedoch auch durch die Software-Komponente Messungen bei verschiedenen Bedienvorgängen vorgenommen werden, wobei die Messungen die tatsächlich benötigte Ausführungszeit betrifft und wobei davon ausgegangen wird, dass ein Widerruf eines solchen Bedienvorganges eine ähnliche Zeitdauer beanspruchen wird. Es können jedoch auch statistische Erhebungen für die jeweils benötigte Zeitdauer von tatsächlichen "Rückgängig-Aktionen" erhoben werden. Dazu kann ein Hersteller der Software-Komponente und/oder ein Benutzer eine Maximaldauer oder sogar für verschiedene Bedienvorgänge verschiedene Maximal-Dauern als Grenzwert(e) definieren, bei deren - voraussichtlicher - Überschreitung ein Hinweis ausgegeben werden soll.

Die Software-Komponente kann in einer vorteilhaften Ausgestaltung weiterhin protokollieren, ob und wann ein Objekt, Element, Datensatz etc. nach einem protokollierten Bedienvorgang gespeichert wurde oder von einer anderen Anwendung zugegriffen, z.B. gelesen, wurde. Falls ein solches Speichern oder ein solcher Zugriff stattgefunden hat und eine Rückgängig-Aktion einen Zustand wiederherstellen würde, der zeitlich vor dem beschriebenen Speichern/Zugriff liegt, soll erfindungsgemäß auch ein entsprechender Hinweis im Auswahldialog ausgegeben werden, um einen Benutzer davor zu warnen, dass Inkonsistenzen bei den (Projekt-)Daten auftreten können.

## Patentansprüche

1. Verfahren für eine Rückgängig-Funktion für ein Gerät mit einer graphischen Benutzeroberfläche,
insbesondere für ein Programmiergerät einer industriellen Automatisierungsanordnung,
wobei eine Mehrzahl an Bedienvorgängen (RA1, RA2, RA3) protokolliert wird,
wobei nach Eingabe eines Befehls eine Anzahl der protokollierten Bedienvorgänge (RA1, RA2, RA3) in einem Auswahldialog (RL) angezeigt wird, und
wobei durch eine Benutzereingabe in Bezug auf den Auswahldialog (RL) einer oder mehrere der angezeigten Bedienvorgänge (RA1, RA2, RA3) ausgewählt wird, wobei dieser oder diese rückgängig gemacht wird oder werden, **dadurch gekennzeichnet,**
**dass** zu zumindest einem der in dem Auswahldialog (RL) angezeigten Bedienvorgänge (RA1, RA2, RA3) ein Hinweis (HWZ) angezeigt wird.

2. Verfahren nach Patentanspruch 1,
**dadurch gekennzeichnet,**
**dass** mittels des Auswahldialogs (RL) Bedienvorgänge (RA1, RA2, RA3) von zumindest zwei verschiedenen Anwendungen, Dateien, Arbeitsblätter oder Kontexte angezeigt werden,
wobei diejenigen der Bedienvorgänge (RA1, RA2, RA3) jeweils durch einen Hinweis (HWZ) gekennzeichnet werden, die ein Objekt oder einen Bedienvorgang in einer zum Zeitpunkt der Anzeige des Auswahldialogs (RL) inaktiven oder verdeckten der Anwendungen, Dateien, Arbeitsblätter oder Kontexte betreffen.

3. Verfahren nach einem der vorhergehenden Patentansprüche, **dadurch gekennzeichnet,**
**dass** der Hinweis (HWZ) zumindest zu jeweils demjenigen oder denjenigen der Bedienvorgänge (RA1, RA2, RA3) angezeigt wird, bei dem oder denen der Rückgängig-Aktion oder einer dieser Rückgängig-Aktion entsprechenden später durchführbaren Wiederherstellen-Aktion eine voraussichtliche Ausführungsdauer zugeordnet ist, die eine vordefinierte Maximaldauer überschreitet.

4. Verfahren nach einem der vorhergehenden Patentansprüche, **dadurch gekennzeichnet,**
**dass** eine Ausgabe oder Anzeige des Hinweises (HWZ) in den Fällen erfolgt, in denen von dem jeweiligen Bedienvorgang solche Daten oder Objekte betroffen sind, die seit diesem Bedienvorgang gespeichert oder von einem anderen Prozess verändert oder verwendet worden sind.

5. Software-Komponente zur Durchführung eines der vorstehenden Verfahren,
mit Protokollierungsmitteln zur Protokollierung von Bedienvorgängen (RA1, RA2, RA3),
mit Anzeige- und Auswahlmitteln für einen Benutzerdialog zur Ausführung von Rückgängig-Aktionen,
**dadurch gekennzeichnet,**
**dass** die Software-Komponente zur Anzeige von Hinweisen (HWZ) zu ausgewählten der protokollierten und angezeigten der Bedienvorgänge (RA1, RA2, RA3) in dem Benutzerdialog ausgestaltet ist.

6. Software-Komponente nach Patentanspruch 5,
**dadurch gekennzeichnet,**
**dass** die Protokollierungseinrichtung zur Protokollierung von Bedienschritten über mehrere Kontexte, Anwendungen, Dateien oder Arbeitsblätter ausgebildet ist,
wobei zu den Bedienschritten der jeweilige Kontext, die Datei, die Anwendung oder das Arbeitsblatt speicherbar ist, und
wobei der Hinweis (HWZ) einen für die jeweilige Rückgängig-Aktion notwendigen Wechsel des derzeitigen Kontextes, Datei, Anwendung oder Arbeitsblattes betrifft.

7. Software-Komponente nach einem der Patentansprüche 5 oder 6,
**dadurch gekennzeichnet,**
**dass** die Software-Komponente zur Ermittlung einer voraussichtlich für die jeweilige Rückgängig-Aktion benötigten Zeitdauer eingerichtet ist,
wobei die Software-Komponente zur Ausgabe des Hinweises (HWZ) zumindest bei dem- oder denjenigen der Bedienvorgänge (RA1, RA2, RA3) eingerichtet ist, bei denen die für die Durchführung der Rückgängig-Aktion voraussichtlich erforderliche Zeitdauer einen zuvor definierten Grenzwert überschreitet.

8. Software-Komponente nach einem der Patentansprüche 5 bis 7,
**dadurch gekennzeichnet,**
**dass** die Software-Komponente weiterhin zur Kennzeichnung von solchen Bedienschritten mit einem Hinweis (HWZ) eingerichtet ist, deren Widerruf zu einer Veränderung von zwischenzeitlich gespeicherten oder von einem anderen Prozess veränderten oder von einem anderen Prozess verwendeten Daten führt.
